# EUROPEAN PATENT APPLICATION

(11) **EP 1 592 078 A2**
(43) Date of publication of application: **02.11.2005**
(21) Application number: 05008952.3
(22) Date of filing: 23.04.2005
(51) Int. Cl.: H01M 2/16

(54) **Battery separator with antistatic properties**

(30) Priority: 30.04.2004 US 836732
(71) Applicant: Celgard Inc., Charlotte, South Carolina 28273 (US)
(72) Inventor: Zhang, Zhengming, Charlotte North Carolina 28270 (US); Nguyen, Khuy V., Charlotte North Carolina 28217 (US)
(74) Representative: Schröder, Richard

(57) **Abstract**

A battery separator comprising: a microporous polyolefin film having from 0.1% to 50% by weight of a block copolymer including a polyetheresteramide monomer. In this battery separator the polyolefin is selected from the group consisting of: polyethylene, polypropylene, polybutylene, polymethylpentene, mixtures thereof, and copolymers thereof. Preferably the polyolefin is polyethylene, mixtures of polyethylene and copolymers of polyethylene, or polypropylene, mixtures of polypropylene and copolymers of polypropylene and has less than or equal to 5% by weight of the block copolymer. In the battery separator of the invention, the microporous film generally has a thickness of no greater than 200 microns, a porosity in the range of 10 to 90%, and a pore size in the range of 0.005 micron to 1.5 micron.

## Description

The present invention is direct to a battery separator having antistatic properties.

Static charge on the mircoporous polyolefin films used as separators in batteries, for example secondary lithium batteries, cause problems. First, in separator manufacture, the static charge draws or attracts contaminants to the film. These contaminants cause film defects, such as blemishes, pin-holes, and the like. Also, during lamination of multi-layer films, contaminants are trapped between the layers. This, too, causes film defects. Second, in battery manufacture, the static charge on the film draws contaminants into the anode/separator/cathode structure (jelly roll or prismatic) that cause defects. Most noticeable of these defects are those that cause internal short circuits. In battery manufacture, the static situation is made even worst by the dry (i.e., low humidity) environment in which these batteries are made. Accordingly, static charge on the microporous polyolefin films used as battery separators is to be avoided.

In the past, static charge has been dissipated by the use of moisture absorbing agents that can be added into or onto a polyolefin film. While these materials work well at dissipating the static charge, they are not used in battery separators, such as secondary lithium batteries, because moisture in those cells must be avoided. Alternatively, static charge has been dissipated by the inclusion of carbon into the film. This, however, must be avoided because the carbon is a conductor and can cause a short circuit between the anode and the cathode.

It may be possible top use a semiconductive materials (P-type conductors (electron conductors) or N-type conductors (hole conductors)) or polaron (electron hopping) materials, added to the separator, to reduce static charge. Examples of P-type conductors (electron conductors) or N-type conductors (hole conductors) materials include but are not limited to: oxides, Fe₂O₃, SiO₂, GaAs, nitrides, GeO, Ge, Si, P, B. Examples of Polaron (electron hopping) materials where a polar medium is able to carry polarons is ionic crystal (like NaCl, KCI, RuCl, etc.).

Further, it may be possible top use a conductive materials (e.g. carbon) in a battery separator produced from a film, where the film is a multi-layered film. Where the multi-layered film is a trilayer, the conductive material is added to the outside layers of the trilayer and the center layer acts as an insulator.

Finally, not all antistatic agents can simply be added to the resins that form the films or coated onto the microporous films because those agents can have a detrimental effect on the microporous nature of the film.

Accordingly, there is a need for a battery separator having good antistatic properties and good microporous properties.

A battery separator comprising: a microporous polyolefin film having from 0.1 % to 50% by weight of a block copolymer including a polyetheresteramide monomer. In this battery separator the polyolefin is selected from the group consisting of: polyethylene, polypropylene, polybutylene, polymethylpentene, mixtures thereof, and copolymers thereof. Preferably the polyolefin is polyethylene, mixtures of polyethylene and copolymers of polyethylene, or polypropylene, mixtures of polypropylene and copolymers of polypropylene, and has less than or equal to 5% by weight of the block copolymer. In the battery separator of the invention, the microporous film can have any thickness, a porosity in the range of 10 to 90%, and a pore size in the range of 0.005 micron to 1.5 micron.

A battery separator comprising: a microporous polyolefin film having a block copolymer including a polyetheresteramide monomer. The specifics of this separator will be discussed in greater detail below.

Microporous polyolefin film also known as microporous membranes are well known and commercially available from Celgard Inc. of Charlotte, North Carolina, USA (CELGARD® membranes, single layer and tri-layer membranes); Tonen Chemical Co. of Tokyo, Japan; Asahi Kasei of Tokyo, Japan (HIPORE™), and Ube Industries of Tokyo, Japan (U-PORE™). These membranes may be made by the "dry-stretch" (or Celgard) process or the "wet" (or phase inversion) process, or by a particle stretch process.

The polyolefin film is selected from the group consisting of, but not limited to: polyethylene, polypropylene, polybutylene, polymethylpentene, mixtures thereof, and copolymers thereof. Preferably the polyolefin is polyethylene, mixtures of polyethylene and copolymers of polyethylene. More preferred the polyolefin is polypropylene, mixtures of polypropylene and copolymers of polypropylene.

The microporous film, in the battery separator of the invention, can have a separator of any thickness. In general, many separators have a thickness of no greater than 200 microns. For batteries used in personal electronic devices, separators having thickness of no greater than 80 microns work well as do separators having a thickness of no greater than 50 microns, while separators having a thickness of 25 µm or less are preferred.

The aforementioned microporous membranes generally possess a porosity in the range of 10% to 90%; preferably a porosity in the range of 20% to 80%. The pore size in these membranes range from 0.005 µm to 1.5 µm, with a range of 0.01 µm to 1.0 µm being preferable.

Generally the microporous polyolefin film has from 0.1 % by weight to 50% by weight of a block copolymer including a polyetheresteramide. The block copolymer including a polyetheresteramide, work well with the microporous polyolefin film at quantities in the range of 0.2% to 45% by weight of the polyolefin used in the microporous membrane. Generally the microporous polyolefin film has from 0.25 % by weight to 30% by weight of a block copolymer including a polyetheresteramide. It has been found that while relatively large amounts of the block copolymer including a polyetheresteramide having at the lower range from 20%, 23%, 25%, 28% and the upper range having from 50%, 48%, 45%, 40%, 35%, 30% by weight provide good anti-static propertries other properties of the film are adversely affected. For overall performance the use of the block copolymer including a polyetheresteramide is better when it is equal to or less than 15%. Preferred are levels of blocked copolymers of less than or equal 5% by weight to the weight of the polyolefin. More preferred levels of blocked copolymers of less than 5% by weight based on the weight of the polyolefin. Surprisingly this blocked copolymer also works well at levels of 4% or less, 3% or less and 2% or less by weight to the weight of the polyolefin used.

The polyetheresteramide monomer of the present invention preferably comprises residues derived from (1) a polyamide oligomer having end units containing a carboxylic group and having a number average molecular weight from 200 to 5,000 and (2) an oxyalkylated bisphenol compound containing from 32 to 60 oxyethylene units. In these polyetheresteramide the carboxylic group is derived from adipic, sebacic, terephthalic or isophthalic acids or 3-sulfoisophthalic acid alkali metal. The oxyalkylated bisphenol compound of the polyetheresteramide comprises an oxyalkylated alkylidene bisphenol. The polyetheresteramide monomer is produced by Sanyo Chemical Industries, Ltd., Kyoto, Japan and is available in the US from Tomen America Inc., under the Trademark Pelestat®.

The microporous film can be made up of one or more layers of materials which may be the same or different. When using more than one layer it is preferred to have the layers joined together in a manner that the stay joined together. This joining of layers my include, but is not limited to: lamination, hot nip bonding, bonding, and joined with one or more adhesives. Trilayer polyolefin films which incorporate the block copolymer show improved antistatic properties an example is a trilayer film of polypropylene/polyethylene/polypropylene.

This battery separator may be produced from a film, where the film is a multi-layered film and the block copolymer is in the outer most layers of said multi-layered film or in all the layers.

Where the battery separator's film is a tri-layered film, the block copolymer works well, in the outer most layers of said tri-layered film. However, as with the multilayer, the block copolymer can be in all the layers.

The battery separators of the present invention are well adapted for use in a lithium ion secondary battery. A lithium ion secondary battery is a cylindrical or prismatic battery composed of anode, cathode, separator, and electrolyte, which is packaged in a rigid (e.g., metallic) can or flexible foil.

## Claims

1. A battery separator comprising:
a microporous polyolefin film having a block copolymer including a polyetheresteramide monomer.

2. A battery separator comprising:
a microporous polyolefin film where said microporous polyolefin film;
where said microporous polyolefin film also comprising from 0.1 % by weight to 50% by weight of a block copolymer including a polyetheresteramide monomer.

3. The battery separator of claim 2 wherein said polyolefin being selected from the group consisting of: polyethylene, polypropylene, polybutylene, polymethylpentene, mixtures thereof, and copolymers thereof.

4. The battery separator of claim 2 where said microporous film has a pore size in the range of 0.005 to 1.5 micron.

5. A battery separator comprising:
a microporous polyolefin film where said microporous polyolefin film is selected from the group consisting of: polyethylene, mixtures of polyethylene, copolymers of polyethylene, polypropylene, mixtures of polypropylene, copolymers of polypropylene, polybutylene, mixtures of polybutylene, and copolymers of polybutylene, polymethylpentene, mixtures of polymethylpentene, and copolymers of polymethylpentene, and mixtures thereof;
said microporous polyolefin film having a porosity in the range of 10 to 90%; and
said microporous polyolefin film also comprising less than our equal to 15% by weight of a block copolymer including a polyetheresteramide monomer.

6. A battery separator comprising:
a microporous polyolefin film where said microporous polyolefin film is selected from the group consisting of: polyethylene, mixtures of polyethylene, copolymers of polyethylene, polypropylene, mixtures of polypropylene, and copolymers of polypropylene;
said microporous polyolefin film having a thickness of no greater than 200 microns, a porosity in the range of 10 to 90%; and
said microporous polyolefin film also comprising less than 5% by weight of a block copolymer including a polyetheresteramide monomer.

7. The battery separator of claim 6 where said microporous film has a pore size in the range of 0.005 to 1.5 micron.

8. The battery separator of claim 6 where said block copolymer including a polyetheresteramide monomer is 4% by weight or less.

9. A battery separator comprising:
a microporous polyolefin film having less than or equal to 5% by weight of a block copolymer including a polyetheresteramide monomer.

10. The battery separator of claim 9 wherein said polyolefin being selected from the group consisting of: polyethylene, polypropylene, polybutylene, polymethylpentene, mixtures thereof, and copolymers thereof.

11. The battery separator of claim 9 wherein said polyolefin being polyethylene, mixtures of polyethylene and copolymers of polyethylene, and having less 5% by weight of the block copolymer.

12. The battery separator of claim 9 wherein said polyolefin being polypropylene, mixtures of polypropylene, and copolymers of polypropylene, and having less than 5% by weight of said block copolymer.

13. The battery separator of claim 9 wherein said polyolefin being polypropylene, mixtures of polypropylene, and copolymers of polypropylene, and having less than or equal to 4% by weight of said block copolymer.

14. The battery separator of claim 9 wherein said microporous film having a thickness of no greater than 200 microns, a porosity in the range of 10 to 90%, and a pore size in the range of 0.005 micron to 1.5 micron.

15. The battery separator of claim 9 wherein said film being a multi-layered film and said block copolymer being in the outer most layers of said multi-layered film.

16. The battery separator of claim 9 wherein said film being a tri-layered film and said block copolymer being in the outer most layers of said tri-layered film.

17. A multilayer battery separator comprising:
an inner layer of a microporous polyolefin film where said microporous polyolefin film is selected from the group consisting of: polyethylene, polypropylene, polybutylene, polymethylpentene, mixtures thereof, and copolymers thereof;
an outer layer of a microporous polyolefin film where said microporous polyolefin film is selected from the group consisting of: polyethylene, mixtures of polyethylene, copolymers of polyethylene, polypropylene, mixtures of polypropylene, copolymers of polypropylene, polybutylene, mixtures of polybutylene, and copolymers of polybutylene, polymethylpentene, mixtures of polymethylpentene, and copolymers of polymethylpentene, and mixtures thereof; and said outer layer of said microporous polyolefin film also comprising from 0.1 % to 50% by weight of a block copolymer including a polyetheresteramide monomer.

18. The multilayer battery separator of claim 17 where said inner layer of said microporous polyolefin film comprises from 0.1 % to 50% by weight of a block copolymer including a polyetheresteramide monomer.

19. A trilayer battery separator comprising:
an inner layer of a microporous polyolefin film where said microporous polyolefin film is selected from the group consisting of: polyethylene, mixtures of polyethylene, copolymers of polyethylene, polypropylene, mixtures of polypropylene, copolymers of polypropylene, polybutylene, mixtures of polybutylene, and copolymers of polybutylene, polymethylpentene, mixtures of polymethylpentene, copolymers of polymethylpentene, and mixtures thereof;
two outer layers of a microporous polyolefin film where said microporous polyolefin film is selected from the group consisting of: polyethylene, mixtures of polyethylene, copolymers of polyethylene, polypropylene, mixtures of polypropylene, copolymers of polypropylene, polybutylene, mixtures of polybutylene, and copolymers of polybutylene, polymethylpentene, mixtures of polymethylpentene, copolymers of polymethylpentene, and mixtures thereof; and
said two outer layers of said microporous polyolefin film also comprising from 0.1 % to 50% by weight of a block copolymer including a polyetheresteramide monomer.

20. The trilayer battery separator of claim 19 where said inner layer of said microporous polyolefin film comprises from 0.1 % to 50% by weight of a block copolymer including a polyetheresteramide monomer.

21. The trilayer battery separator of claim 19 where said outer layers of said microporous polyolefin film comprises less than 5% by weight of a block copolymer including a polyetheresteramide monomer.

22. The trilayer battery separator of claim 19 where said outer layers of said microporous polyolefin film comprises from 20% to 50% by weight of a block copolymer including a polyetheresteramide monomer.

23. The trilayer battery separator of claim 19 wherein said microporous film having a thickness of no greater than 200 microns, a porosity in the range of 20 to 80%, and a pore size in the range of 0.005 micron to 1.5 micron.
